# EUROPEAN PATENT SPECIFICATION

(11) **EP 4 320 814 B1**
(45) Date of publication and mention of the grant of the patent: **02.09.2026**
(21) Application number: 21787374.4
(22) Date of filing: 05.10.2021
(51) Int. Cl.: H04L 9/40

(54) **APPARATUS, METHOD AND COMPUTER PROGRAM FOR MANAGING A PLURALITY OF SETS OF ACCESS SETTINGS FOR A VEHICULAR GATEWAY**
VORRICHTUNG, VERFAHREN UND COMPUTERPROGRAMM ZUR VERWALTUNG MEHRERER SÄTZE VON ZUGANGSEINSTELLUNGEN FÜR EIN FAHRZEUGGATEWAY
APPAREIL, PROCÉDÉ ET PROGRAMME INFORMATIQUE POUR GÉRER UNE PLURALITÉ D'ENSEMBLES DE PARAMÈTRES D'ACCÈS POUR UNE PASSERELLE DE VÉHICULE

(43) Date of publication of application: 14.02.2024
(73) Proprietor: CARIAD SE, 38440 Wolfsburg (DE)
(72) Inventor: MAX, Stephan, 38518 Gifhorn (DE); THEIMER, Wolfgang, 44879 Bochum (DE)
(74) Representative: Hofstetter, Schurack & Partner
(86) International application number: PCT/EP2021/077338
(87) International publication number: WO 2023/057042

(56) References cited:
- EP-A2- 1 956 794
- WO-A1-2020/070061
- US-A1- 2019 274 018
- US-A1- 2020 274 851

## Description

The present invention relates to an apparatus, a method and a computer program for managing a plurality of sets of access settings for a vehicular gateway, and to a corresponding vehicle.

In modern vehicles, an ever-increasing number of functions are provided by software. These functions are usually implemented by containerized services that run on the vehicle's computation devices. For example, the so-called automotive edge consists of, or is implemented using, function containers, which are containers encapsulating software functionality. These function containers often require access to car signals (read and write access) for reading out sensor information or write to actors inside the car. Additionally, the function containers may communicate with a backend.

However, some function containers may be considered to be unsafe ("non-safety") - no access might be allowed to car breaks, steering functions etc. Consequently, the car signals are to be protected from the function containers to avoid possible misuse. There are several safety related car signals inside the car - these signals have to be excluded from access by the function container to ensure the safety of the car. Therefore, a firewall may be required.

In other systems, the security signal access system is only static, and included in the basic car software. In such systems, dynamically adding / changing of the access system may not be possible, and thus the access system might not be adaptable to ever-changing function containers, thereby limiting the level of change possible with software updates in function containers. Moreover, vehicles may comprise a general access control system for software elements. However, such an access control system might not take into account safety regarding access to the car signals.

WO 2020/070061 A1 relates to a method for executing one or more vehicle applications using a vehicle computation unit of a vehicle. In said publication, a security impact of executing the vehicle applications is mitigated by distributing permission information manifests among vehicular computation units of the vehicle, enabling a distributed concept for enabling access of the vehicular applications to other vehicular computation units.

US 2019/01394089 A1 relates for a concept for configuring a firewall system in a vehicular network. In said system, the firewall is updated when an over-the-air-update is applied to software in the vehicle. In said publication, the preparation of the firewall configuration, and the deployment to various firewalls of vehicle, is managed by a backend server.

US 2013/0212659 A1 relates to a concept for trusted connected vehicle systems and methods. In said application, firewalls are used to restrict communication across communication busses of a vehicle.

WO 2020/010192 A1 relates to a vehicular data privacy management system, which is used to securely delete private data in rental vehicles.

US 2020/274851 A1 relates to a full featured packet-based automotive network security gateway.

There may be a desire for an improved concept for enabling safety with respect to an access to signals of sensors and/or actors within a vehicle.

This desire is addressed by the independent claims. Any examples and embodiments of the description not falling within the scope of the claims do not form part of the invention as defined by the independent claims.

Various examples of the present disclosure are based on the finding, that modern vehicles often feature a wide range of software components that originate from different parties, and which may be installed via a software repository provided by the vehicle manufacturer. Moreover, due to compatibility restrictions and difficulties regarding a periodic communication with the software repository, different versions of these software components may be used by different vehicles. This leads to a wide range of different combinations of software being executed within a vehicle, which may increase the complexity of managing secure access of the software components to signals of sensors and/or actuators. Therefore, the present disclosure relates to a method, apparatus and computer program that can be used to locally manage sets of access settings of a plurality of computational function containers within a vehicle. When the function containers are updated frequently (e.g. possibly every week), also the interfaces may be updated regularly. If a computational function container is updated, a corresponding set of access settings is received by a component of the vehicle, which is then used to locally update a vehicular gateway restricting access to the sensors/actuators of the vehicle. Various examples of the present disclosure may thus provide a gateway that is built on top of an existing secure access system for access to car signals. Permissions of the gateway vis-à-vis the existing secure access system may be static, but permission of function gateways vis-à-vis the gateway can change dynamically. A rules and rights manager is provided that is used to provide a comprehensive set of rules that the gateway uses.

An aspect of the present disclosure relates to an apparatus for managing a plurality of sets of access settings for a vehicular gateway. The vehicular gateway is configured to control an access of a plurality of computational function containers to one or more sensors or actuators of the vehicle. The apparatus comprises at least one interface for communicating with a backend server. The apparatus comprises one or more processors. The one or more processors are configured to manage a plurality of sets of access settings of the plurality of computational function containers. The one or more processors are configured to receive, when a computational function container is updated via the backend server, an updated set of access settings for the updated computational function container from the backend server. The one or more processors are configured to update the plurality of sets of access settings based on the updated access setting. The one or more processors are configured to provide the plurality of sets of access settings for the vehicular gateway. This provides a local management and distribution of the access settings in a heterogeneous software environment, thus reducing a server-side complexity while being applicable to a wide range of software being executed in a vehicle.

Each set of access settings defines an access of a single computational function container to the one or more sensors or actuators of the vehicle. In other words, the access settings may be obtained separately for each computational function container, e.g., alongside an update of the respective computational function container.

Each set of access settings defines a read and write access of a single computational function container to the one or more sensors or actuators of the vehicle. Accordingly, the access settings of different computational function containers may be combined in the vehicle, thus reducing a server-side complexity while being applicable to a wide range of software being executed in a vehicle.

In some examples, each set of access settings may further define an access of the computational function container to one or more external entities. Accordingly, the proposed concept may not only be used for managing the access of computational function containers to vehicular signals, but also for managing the access of computational function containers with external entities, such as the backend server or another server.

In some examples, computational function containers may be used that can be used in different environment, e.g., different vehicles, with different access settings. Therefore, the computational function containers may be informed with respect to the access settings that apply to them. For example, the one or more processors may be configured to provide information on the respective sets of access settings to the plurality of computational function containers.

In some examples, a two-pronged approach may be used. For example, the general limits of access provided to the computational function containers may be based on the access settings provided by the backend server. A local component may be used to personalize the access settings. For example, a driver of the vehicle may modify the access settings according to their personal preference, e.g., with respect to privacy. For example, inside the vehicle, the driver can modify the privacy setup via an in-car human-machine-interaction system. Outside the vehicle, the customer can modify the privacy setups via customer apps or a support center request. These personal preferences, such as privacy rules, may now be enforced into the communication chains via the proposed rules and rights system.

In other systems, separate systems may be provided to implement interfaces from the function container to the car (for access to sensors and/or actuators) and to the backend, an in-car privacy setup and/or apps may be provided to change the privacy state of the car. These systems are generally not interconnected, so the privacy setup might not take effect on the communication between the function containers and the backend and/or the sensors/actuators of the vehicle.

Therefore, the proposed rules and rights manager may be extended with a dual source of input - general rules by backend, user-specified (privacy) rules from backend or from in-car privacy setup. The general rules may be made conditional on the privacy settings. The respective containers (computational function containers) may be notified of the combination of general rules and privacy rules. This may provide an application of per-user privacy settings and may provide a dynamic "modulation" of access rights by privacy settings which can be performed immediately and locally in the vehicle without backend communication.

In various examples, the one or more processors may be configured to obtain information on access preferences of a driver of the vehicle. The one or more processors may be configured to combine the plurality of sets of access settings with the access preferences. The one or more processors may be configured to provide the combination of the plurality of sets of access settings and the access preferences for the plurality of computational function containers. Thus, the afore-mentioned two-pronged approach may be used.

For example, each set of access settings may comprise at least one setting being dependent on the access preferences of the driver of the vehicle. Access settings that permit the user preferences to be included as conditional may be used to provide a local combination of the general sets of access settings and the access preferences of the driver.

In general, the access preferences may be driver-specific, with different access preferences being used for different drivers of the vehicle. Different drivers may have different access preferences, e.g., privacy preferences.

Consequently, the driver-specific access preferences may be loaded based on a driver being logged into an infotainment system of the vehicle, based on a mobile device being coupled with the vehicle, or based on a vehicle key fob being used to access the vehicle. In other words, the driver may be identified, and appropriate driver-specific access preferences may be loaded.

For example, as outlined earlier the access preferences may be privacy preferences of the driver of the vehicle. This may adjust the level of access of the computational function containers to the privacy preferences of the driver of the vehicles.

In some examples, the vehicular gateway may be separate from the apparatus. In some examples, however, the apparatus may be part of the vehicular gateway, i.e., the apparatus may implement the vehicular gateway. Accordingly, the apparatus may be configured to implement the vehicular gateway. The one or more processors may be configured to control the access of the plurality of computational function containers to the one or more sensors or actuators based on the plurality of sets of access settings.

As outlined above, the vehicular gateway may be generally used to limit an access of the computational function containers to sensors/actuators and/or external entities. Accordingly, the one or more processors may be configured to control the access of the plurality of computational function containers to one or more external entities based on the plurality of sets of access settings.

The vehicular gateway being implemented may facilitate reporting computational function containers that exceed the access settings applied to them. For example, the one or more processors may be configured to report access violations of the plurality of computational function containers to the backend server.

To treat the traffic of each computational function container with the appropriate access settings, the sets of access settings may be linked with the corresponding computational function containers. For example, each of the plurality of sets of access settings may comprise an identifier. The identifier may be used to identify the corresponding computational function container towards the vehicular gateway.

An aspect of the present disclosure relates to a corresponding method for managing a plurality of sets of access settings for a vehicular gateway. The vehicular gateway is configured to control an access of a plurality of computational function containers to one or more sensors or actuators of a vehicle. The method comprises managing a plurality of sets of access settings of the plurality of computational function containers. The method comprises receiving, when a computational function container is updated via a backend server, an updated set of access settings for the updated computational function container from the backend server. The method comprises updating the plurality of sets of access settings based on the updated access setting. The method comprises providing the plurality of sets of access settings for the vehicular gateway. For example, the method may be performed by the vehicle, e.g., a component of the vehicle, such as the above-mentioned apparatus.

An aspect of the present disclosure relates to a corresponding computer program having a program code for performing the above method, when the computer program is executed on a computer, a processor, or a programmable hardware component.

Some examples of apparatuses and/or methods will be described in the following by way of example only, and with reference to the accompanying figures, in which
- Figs. 1a and 1b: show block diagrams of examples of an apparatus for managing a plurality of sets of access settings for a vehicular gateway;
- Fig. 1c: shows a schematic diagram of an example of a vehicle comprising an apparatus for managing a plurality of sets of access settings for a vehicular gateway;
- Fig. 1d: shows a flow chart of an example of a method for managing a plurality of sets of access settings for a vehicular gateway;
- Fig. 2: shows a schematic diagram of an example of a system comprising a rules and rights manager;
- Fig. 3a: shows a schematic diagram of another example of a system comprising a rules and rights manager; and
- Fig. 3b: shows a diagram of an example of access rights filtering based on user-specific rules and user privacy settings.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

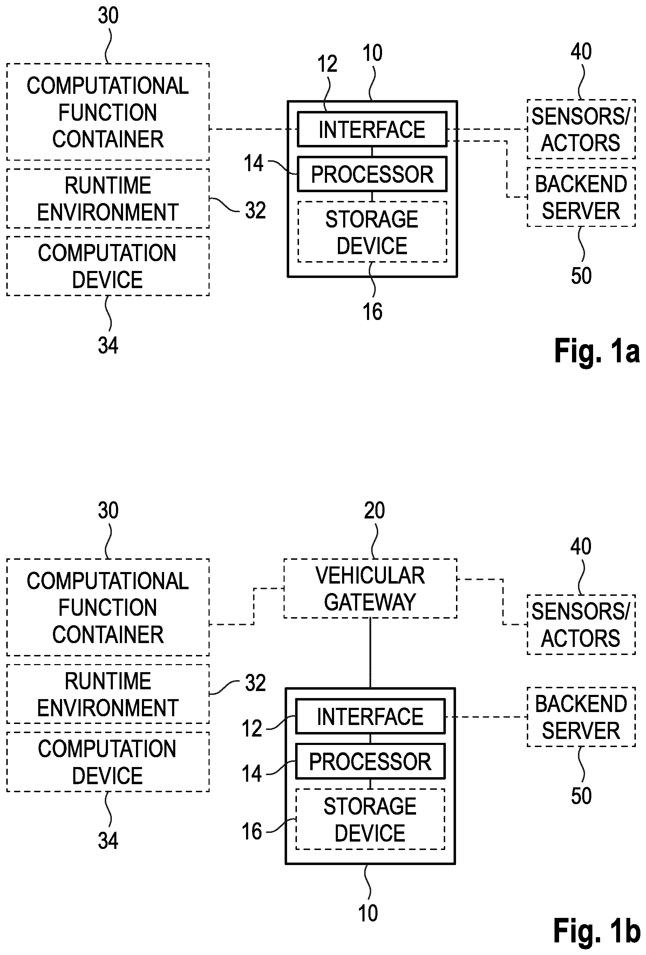

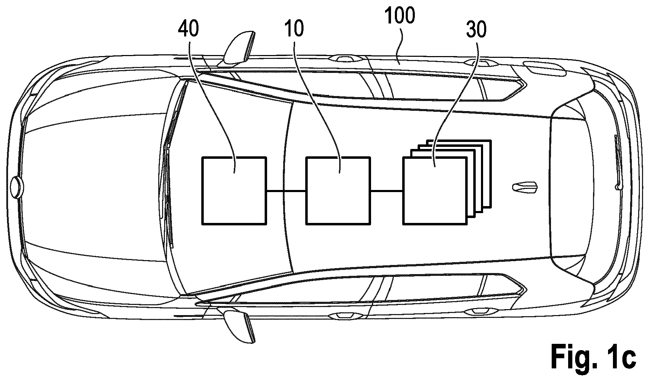

Figs. 1a and 1b show block diagrams of examples of an apparatus 10 for managing a plurality of sets of access settings for a vehicular gateway 20. In the following, the apparatus 10 may be further denoted "rules and rights manager/engine" 10 or "rules and privacy manager/engine" 10. The vehicular gateway 20 is configured to control an access of a plurality of computational function containers 30 to one or more sensors or actuators 40 of a vehicle 100 (shown in Fig. 1c). The apparatus comprises at least one interface 12 suitable for (or configured to) communicating/communicate with a backend server 50. In addition, the at least one interface 12 may be suitable for, or configured to, communicating/communicate with the vehicular gateway 20, the plurality of computational function containers and/or the one or more sensors or actuators. The apparatus 10 comprises one or more processors 14, which are coupled with the at least one interface 12. Optionally, the apparatus 10 further comprises one or more storage devices 16, which are also coupled with the one or more processors 14. In general, the functionality of the apparatus 10 is provided by the one or more processors 14, in conjunction with the at least one interface 12 (for exchanging information, e.g., with the backend server 50, the one or more sensors and/or actuators 40, the plurality of computational function containers 30 and/or the vehicular gateway 20) and/or the optional one or more storage devices 16 (for storing and retrieving information).

The one or more processors are configured to manage a plurality of sets of access settings of the plurality of computational function containers. The one or more processors are configured to receive, when a computational function container is updated via the backend server, an updated set of access settings for the updated computational function container from the backend server. The one or more processors are configured to update the plurality of sets of access settings based on the updated access setting. The one or more processors are configured to provide the plurality of sets of access settings for the vehicular gateway.

In general, as shown in Figs. 1a and/or 1b, the computational function containers may comprise software which is executed in a runtime environment 32 that is provided by a computation device 34 of the vehicle 100. For example, similar to the apparatus 10, the computation device 34 may comprise one or more processors, one or more interfaces and one or more storage devices. In some examples, the apparatus 10 may correspond to the computation device.

Fig. 1c shows a schematic diagram of an example of a vehicle comprising the apparatus 10 for managing a plurality of sets of access settings for a vehicular gateway 20. For example, the vehicle may comprise the vehicular gateway 20, the plurality of computational function containers 30 (e.g., the computation device(s) 32 hosting the plurality of computational function containers 30 in a runtime environment 32) and/or the one or more sensors and/or actuators. For example, the backend server 50 may be a server that is external to the vehicle 100. For example, the communication between the vehicle 100 and the backend server 50 may be conducted via a wireless communication link.

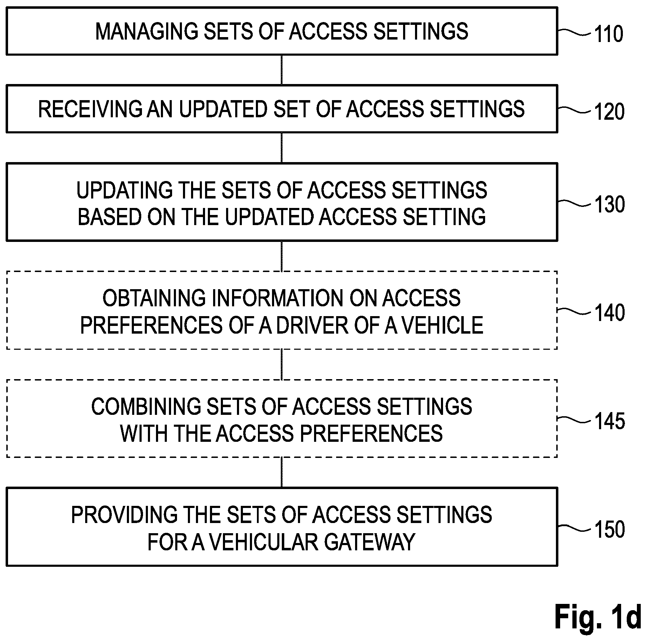

Fig. 1d shows a flow chart of an example of a corresponding method for managing the plurality of sets of access settings for the vehicular gateway. The method comprises managing 110 the plurality of sets of access settings of the plurality of computational function containers. The method comprises receiving 120, when a computational function container is updated via the backend server, an updated set of access settings for the updated computational function container from the backend server. The method comprises updating 130 the plurality of sets of access settings based on the updated access setting. The method comprises providing 150 the plurality of sets of access settings for the vehicular gateway. For example, the method may be performed by the vehicle, e.g., the apparatus 10 introduced in connection with Figs. 1a to 1d.

In the following, the features of the apparatus 10 of Figs. 1a to 1c, of the corresponding method and of a corresponding computer program are introduced in connection with the apparatus 10. Features introduced in connection with the apparatus 10 may be likewise included in the corresponding method and computer program.

In vehicles, functionality is increasingly being provided by software. This software may be provided as so-called software containers, which are denoted computational function containers in the present disclosure. One or more services can be encapsulated with all their dependencies in such a computational function container/software container. Software containers are particularly known for use on servers and developer devices. For example, such containers may be provided by various container engines (Docker, Podman, Crio, ...). In the present disclosure, such software containers are adapted for the use in vehicles.

In general, each computational function container represents a vehicle functionality that is implemented by software. In other words, each computational function container is configured to provide a vehicle functionality of the vehicle. In particular, each computational function container represents a software-implemented vehicle functionality. Also, each computational function container is encapsulated, i.e., it includes all program code and dependencies, to be executable within a runtime environment 32 of a computation device 34. In some examples, the computational function container may be executed in a runtime provided by the apparatus 10. In some other examples, the computational function container may be executed in a runtime provided by another computation device of the vehicle. Abstract interfaces may be provided, by the respective computation device, to access the one or more sensors, actuators, communication channels and host resources from within the runtime environment. For this purpose, the computational function containers can be implemented, for example, as software containers that are used in runtime environments 32 that provide standardized and abstracted interfaces for the containers. Accordingly, each computational function container may be designed to be executed as a container within a runtime environment 32. In turn, the apparatus 10 or the computation device 34 may be configured to provide a runtime environment for the execution of containers. In the present disclosure, it is assumed, that at least one of the computational function containers requires access to the one or more sensors and/or actuators of the vehicle.

Various aspects of the present disclosure relate to an apparatus, method, and computer program for managing a plurality of sets of access settings for the vehicular gateway 10; 20. In other words, the present apparatus, method, and computer program are used to provide and control sets of access settings for the vehicular gateway. The sets of access settings are used by the vehicular gateway to provide and restrict an access of the plurality of computational function containers to the one or more sensors (e.g., a perception sensor (such as a camera, a lidar sensor or a radar sensor), a satellite positioning sensor, a rain sensor etc.) and/or actuators (such as controller for a windshield wiper, a controller for a sound system of the vehicle, an infotainment system of the vehicle) of the vehicle. In some examples, sets of access settings are used by the vehicular gateway to provide and restrict an access of the plurality of computational function containers to one or more external entities, such as the backend server or another server that is external to the vehicle. In effect, the vehicular gateway may act as firewall, providing access for the plurality of computational function containers in accordance with the access settings.

In the present concept, the sets of access settings are updated in line with the computational function containers being updated. Accordingly, the sets of access settings may have a granularity of a single computational function container. In other words, each set of access settings may define an access of a single computational function container to the one or more sensors or actuators of the vehicle, e.g., a read and write access of a single computational function container to the one or more sensors or actuators of the vehicle. Moreover, each set of access settings may further define an access of the computational function container to one or more external entities.

The one or more processors are configured to manage the plurality of sets of access settings of the plurality of computational function containers. In other words, the one or more processors may be configured to maintain a registry of the sets of access settings (e.g., using the one or more storage devices 16), and to provide the vehicular gateway with the sets of access settings that are relevant for the plurality of sets of access settings. When a computational function container is updated, the one or more processors are configured to update, i.e., replace, the set of access settings with the newly updated set of access settings (e.g., in the stored sets of access settings), and to propagate the update to the vehicular gateway. A correspondence between the updated set of access settings and the corresponding computational function container may be determined based on an identifier of the computational function block that may be contained in the (updated) set of access settings. In other words, each of the plurality of sets of access settings may comprises an identifier. The identifier may be used to identify the corresponding computational function container. In particular, the identifier may be used to identify the corresponding computational function container towards the vehicular gateway.

Once the sets of access settings are updated, the updated set of access settings may be provided for the vehicular gateway (at least if the updated access settings is different from the previously used set of access settings). For example, the updated set of access settings may be provided individually to the vehicular gateway. Alternatively, the one or more processors may be configured to re-compile the plurality of sets of access settings for the vehicular gateway when a set of access settings is updated (if the updated access settings is different from the previously used set of access settings), and to provide the re-compiled plurality of access settings for the vehicular gateway.

In the present context, the term "provide the plurality of sets of access settings for the vehicular gateway" is chosen to indicate, that the plurality of sets of access settings is not necessarily provided to the vehicular gateway. In some examples, as shown in Fig. 1b, the vehicular gateway 20 may be separate from the apparatus 10. In this case, the plurality of sets of access settings are indeed provided to the vehicular gateway 20. In some cases, as illustrated in Fig. 1a, the vehicular gateway is implemented by the apparatus 10. In other words, the apparatus 10 may be part of the vehicular gateway. In this case, as the entity providing the plurality of sets of access settings and the entity being the vehicular gateway are the same, the plurality of sets of access settings are determined in the vehicular gateway.

In the following, it is assumed that the vehicular gateway is implemented by the apparatus 10. However, the functionality described in the following may be provided, alternatively, by a separate vehicular gateway 20 as shown in Fig. 1b. For example, wherein the one or more processors may be configured to control the access of the plurality of computational function containers to the one or more sensors or actuators based on the plurality of sets of access settings. Moreover, the one or more processors may be configured to control the access of the plurality of computational function containers to one or more external entities based on the plurality of sets of access settings. When a computational function container requests access to the one or more sensors or actuators or to the one or more external entities, it may identify itself towards the apparatus 10/vehicular gateway using the identifier of the computational function container. The vehicular gateway may be configured to look up the set of access settings for the computational function container based on the identifier of the computational function container, and to provide access to the one or more sensors or actuators or to the one or more external entities according to the set of access settings stored with respect to the computational function container. For example, the vehicular gateway may be a component that is used on top of a static security signal access system that is only updated in line with a basic software system of the vehicle. The vehicular gateway may be provided with access to non-security related signals, which may then be provided to the computational function blocks.

As will become evident in the following, in some cases, the computational function container may initially not be aware of the access rights it has with respect to the one or more sensors/actuators or one or more external entities. This may be the case if the set of access settings are combined with user-specific access preferences that can further limit the access of the computational function container to the one or more sensors/actuators or one or more external entities. Therefore, the one or more processors may be configured to provide information on the respective sets of access settings to the plurality of computational function containers. The computational function containers may take the sets of access settings into account when trying to access the one or more sensors/actuators or one or more external entities. If this is not the case, or if a computational function container is malfunctioning or malicious, attempted access violations may be reported to the backend server. In other words, the one or more processors may be configured to report access violations of the plurality of computational function containers to the backend server. If such access violations occur frequently, the respective computational function container may be blocked and/or investigated.

As outlined above, in some examples, the sets of access settings may be combined with access preferences of a driver of the vehicle. In other words, the one or more processors may be configured to obtain information on access preferences of a driver of the vehicle, to combine the plurality of sets of access settings with the access preferences, and to provide the combination of the plurality of sets of access settings and the access preferences for the plurality of computational function containers. Accordingly, the method of Fig. 1c may further comprise obtaining 140 information on access preferences of a driver of the vehicle and combining 140 the plurality of sets of access settings with the access preferences. For example, the sets of access settings and the access preferences may be combined by imposing the access preferences of the driver onto the sets of access settings, e.g., to limit the sets of access settings to the access preferences of the driver. For example, depending on the access preferences of the driver, the sets of access settings may be adjusted so they do not violate the access preferences set by the driver. The combination of the plurality of sets of access settings and the access preferences may be provided to the vehicular gateway as plurality of sets of access settings, and the vehicular gateway may provide and limit access to the one or more sensors/actuators and/or the one or more external entities based on the combination of the plurality of sets of access settings and the access preferences.

In the context of the present disclosure, the sets of access settings are general settings that apply to the respective computational function container. For example, the sets of access settings may be specified by a manufacturer of the vehicle, or by a provider of the computational function block (and vetted by the manufacturer of the vehicle). In other words, the sets of access settings may be generic, non-driver specific. As an exception, if some access preferences are specified by the driver at the backend, the set of settings may be user-specific as well. On contrast, the access preferences are specific to the driver of the vehicle, e.g., specified by the driver of the vehicle. For example, the access preferences may be specified by the driver via a user interface of the vehicle. Moreover, the access preferences are driver specific, so different drivers of a vehicle may specify different access preferences. In other words, the access preferences may be driver-specific, with different access preferences being used for different drivers of the vehicle. The respective access preferences may be explicitly activated by the driver, or they may be implicitly loaded based on a secondary identifier, such as a mobile device (e.g., a smartphone) of the driver or a key fob of the driver (assuming each driver uses a separate key fob). Accordingly, the driver-specific access preferences may be loaded (by the one or more processors) based on a driver being logged into an infotainment system of the vehicle, based on a mobile device being coupled with the vehicle, or based on a vehicle key fob being used to access the vehicle.

To allow for a local combination of the access settings and the access preferences of the driver, at least some of the access preferences may be formulated dependent on the respective access settings. In other words, each set of access settings may comprise at least one setting being dependent on the access preferences of the driver of the vehicle. For example, the setting being dependent on the access preferences may specify a first access (e.g., read only, write only, read/write or block) if the access preferences specify a first access preference (e.g., "increased privacy protections"), and a second access if the access preferences specify a second access preference ("medium or reduced privacy protections"). For example, the access preferences may specify one of two or more pre-defined access preferences, and the setting being dependent on the access preferences may be defined with respect to each of the two or more pre-defined access preferences. For example, the access preferences may be privacy preferences of the driver of the vehicle. Accordingly, the two or more pre-defined access preferences may comprise an increased privacy protections access preference, a medium or balanced privacy protections access preference and a reduced privacy protections access preference. Based on the selected access preference, different level of functionalities may be enabled at the computational function blocks.

Examples may be compliant with ECE/TRANS/WP.29, a United Nations regulation on uniform provisions concerning the approval of vehicles with regards to software update and software updates management systems. In particular, the examples may be compliant with section 7 of said regulation, and may implement or extend various sections, and in particular sections 7.1.1.8 - 7.1.1.10. Examples may also be compliant with and/or implement and extend ISO/IEC 27701, ISO/IEC 29100:2011 and/or ISO/IEC 30165.

The at least one interface 12 may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information.

The one or more processors 14 may be implemented using one or more processing units, one or more processing devices, any means for processing, such as a processor, a computer or a programmable hardware component being operable with accordingly adapted software. In other words, the described function of the one or more processors 14 may as well be implemented in software, which is then executed on one or more programmable hardware components. Such hardware components may comprise a general purpose processor, a Digital Signal Processor (DSP), a micro-controller, etc.

The one or more storage devices 16 may comprise at least one element of the group of a computer readable storage medium, such as a magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

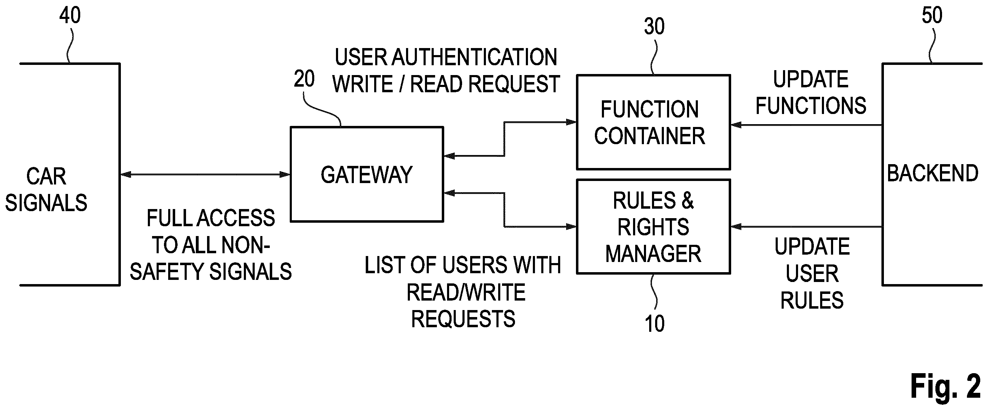

More details and aspects of the apparatus, method, computer program and vehicle are mentioned in connection with the proposed concept or one or more examples described above or below (e.g. Fig. 2 to 3b). The apparatus, method, computer program and vehicle may comprise one or more additional optional features corresponding to one or more aspects of the proposed concept or one or more examples described above or below.

Various aspects of the present disclosure relate to a security function containers and to a corresponding firewall for a function container.

In various examples of the present disclosure, a new software element (a vehicular gateway 20) may be installed between function containers (i.e., computational function containers) 30 and the car signals 40 and act as a gateway (firewall). Fig. 2 shows a schematic diagram of an example of a system comprising a rules and rights manager 10 and a vehicular gateway 20. The gateway 20 may forward the communication between the car signals to the function containers 30. The gateway 20 may have access to all car signals via the given static security access system, except car signals with safety rating - these may be excluded.

The gateway connects to the function containers 20 and to a "rules and rights manager" 10. The function containers may authenticate themselves to the gateway (for example by user/password combinations) and may ask for write and/or read access to car signals.

The rules and rights manager 10 may inform the gateway 20 about (all) possible function container users with rights to read/write access to the car signals. The gateway 20 may check whether the function container has the right to perform the requested operation, and, if successful, may forward the data from the function container 30 to the car or vice versa. If the check is not successful, the request of the function container may be blocked. If the function container is unknown at the gateway, the request may be blocked completely.

Optionally, the gateway 20 can report any blocked request to the backend to possibly detect software issues or to help detect intruders.

If an update is applied to a function container 30, the backend 50 may update the function and in parallel also the rules and rights manager 10, either directly or via information contained in the function container that is signed by the backend.

The proposed concept may use a secure access system for software elements.

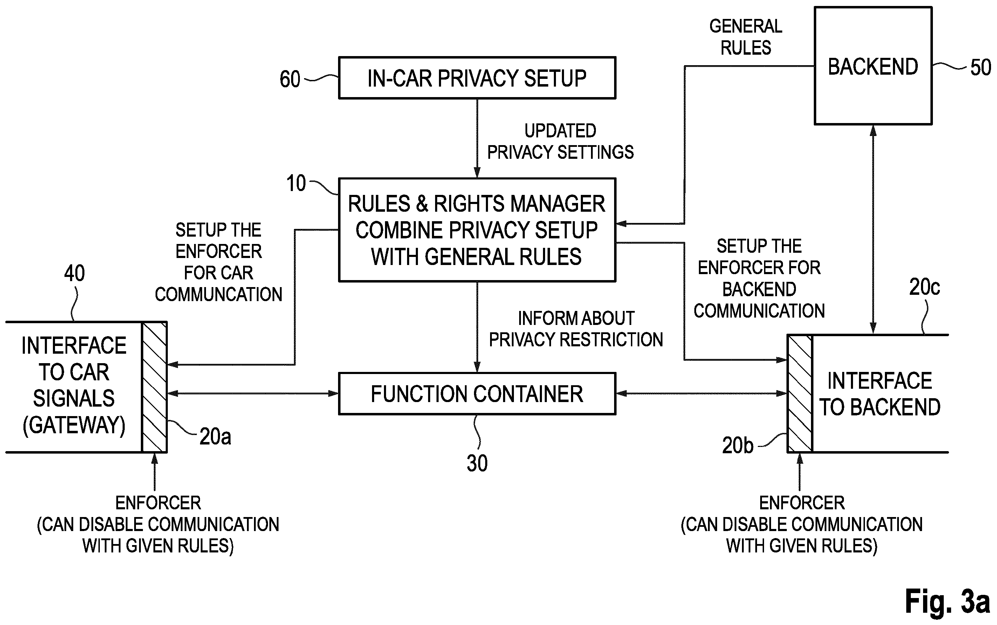

More details and aspects of the rules and rights manager and the vehicular gateway are mentioned in connection with the proposed concept or one or more examples described above or below (e.g. Fig. 1a to 1d, 3a to 3b). The rules and rights manager and/or the vehicular gateway may comprise one or more additional optional features corresponding to one or more aspects of the proposed concept or one or more examples described above or below.

Various aspects of the present disclosure relate to an access rights integration and synchronization with privacy. This aspect of the proposed concept is based on combining a rules and rights system with user-specific rules, such as privacy rules. This can be done by extending the rules set generated by the backend and provided to the car with user-specific (privacy) rules (e.g. to make the rules set conditional on the privacy rules chosen).

For example, access settings/rules such as "function container (i.e., computational function container) XY is allowed access to car signal A IF the privacy state inside the car is, for example, fullprivacy=off" and "Function container XY is allowed to send data to the backend IF the privacy setup give the permission for car-to-backend communication" may be defined.

In the proposed concept, the extending ruleset may combine the backend-given rules (access settings) with the user-defined settings (e.g., privacy states) inside the car, and can therefore react directly on any changes given by the driver of the car. The result of the combined rules (access settings) can be forwarded to the function container for information purposes.

Fig. 3a shows a schematic diagram of another example of a system comprising a rules and rights manager 10, which is extended to support user-specific (privacy) settings. The rules and rights manager is configured to combine the user-defined (privacy) setup (e.g., the access preferences) with the general rules (e.g., the access settings). Fig. 3a further shows the function container 30, an interface to car signals 40 comprising an enforcer 20a (which can disable **communication** with given rules), and interface 20c to the backend 50, the interface comprising a further enforcer component 20b (which can also disable communication with given rules). The backend provides the general rules to the rules and rights manager 10, which in turn sets up the two enforcers 20a; 20b for car communication and backend communication, respectively. In the example shown in Fig. 3a, the rules and rights manager 10 receives updated privacy settings from an in-car privacy setup. Alternatively, the updated privacy settings may be received from the backend 50.

The results of the rules set can be forwarded to the car interface 40 and backend interface 20b. There, the respective enforcer component 20a; 20b may change the allowed data channel regarding the rules set. This may provide additional security in the system, even in the case the function container accidently (e.g. by a bug) tries to perform any privacy-forbidden operation.

If any privacy setup changes happen on the backend side, the backend 50 itself can directly change the rules on the backend side and update the rules and rights manager 10 inside the car.

In addition, the privacy setup may be connected to the identity of the driver, as privacy regulations may be applied on a per-user basis. This can be performed inside the in-car privacy setup by reading out an identifier (e.g. an identification document or a car key) of the user. From the backend side, different rule sets may be given depending on the user.

Optionally, the modified rules set can be reported to the backend to be compliant with GDPR monitoring requirements.

The proposed concept may be based on an interface to car signals, and interface to backend signals (both of which can be implemented by a vehicular gateway), and an in-car/online privacy setup.

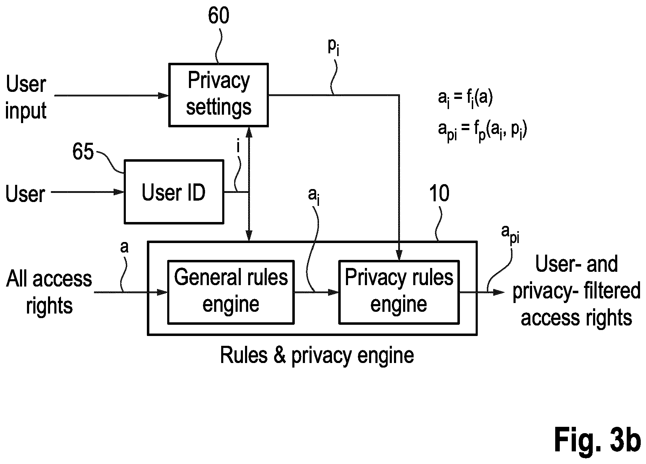

Fig. 3b shows a diagram of an example of access rights filtering based on user-specific rules and user privacy settings. It shows an example of a calculation of user specific access rights by a general rules engine and the access right filtering based on (user-specific) privacy settings.

User input is used to generate user-specific privacy settings block 60, which provides the privacy settings *pᵢ* to a privacy rules engine of a rules and privacy engine (e.g., the rules and rights manager or apparatus) 10. A user-id i 65 of the user is provided to the privacy settings block 60 and to a general rules engine of the rules and privacy engine 10. Access rights *a* are provided go the general rules engine, which provides user-specific access rights *aᵢ*, which are filtered using the privacy rules engine to provide user- and privacy-filtered access rights *aₚᵢ*.

(All of) the available access rights may be modeled as a vector with binary attributes (indicating whether access to a resource is either allowed or not allowed). The access rights are filtered in the general rules engine based on the recognized user identity i, which is modeled by the function *aᵢ = fᵢ*(*a*) providing a filtered vector *aᵢ* of access rights.

The user creates the (user-specific) privacy settings *pᵢ* which are input into a second filter step, the privacy rules engine, to compute the final access rights taking into account the privacy settings: *aₚᵢ = fₚᵢ*(*aᵢ,pᵢ*). The general rules engines as well as the privacy rules engine can be updated by updating the rule functions.

In the proposed concept, the user-specific (privacy) rules are handled by the rules and rights manager 10. An alternative approach is the separate handling of privacy in a separate module independent from the rules and rights engine 10. However, a separate privacy component may add addition development and footprint cost. In addition a synchronization between the separate module and der rules and rights module may be installed.

More details and aspects of the rules and privacy engine are mentioned in connection with the proposed concept or one or more examples described above or below (e.g. Fig. 1a to 2). The rules and privacy engine may comprise one or more additional optional features corresponding to one or more aspects of the proposed concept or one or more examples described above or below.

The proposed concept relates to the automotive edge as a base platform for all online services. The concept may be used in other contexts as well, such as in the context of security- or privacy- relevant container updates for industrial applications.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

### List of reference signs

- 10: Apparatus, vehicular gateway, rules and rights manager, rules and privacy manager
- 12: Interface
- 14: Processor
- 16: Storage device
- 20: Vehicular gateway
- 30: Computational function block
- 32: Runtime environment
- 34: Computation device
- 40: One or more sensor or actuators
- 50: Backend
- 60: Privacy settings/setup
- 65: User-ID
- 100: Vehicle
- 110: Managing sets of access settings
- 120: Receiving an updated set of access settings
- 130: Updating the sets of access settings based on the updated access setting
- 140: Obtaining information on access preferences of a driver of a vehicle
- 145: Combining the sets of access settings with the access preferences
- 150: Providing the sets of access settings for a vehicular gateway

## Claims

1. An apparatus (10) for managing a plurality of sets of access settings for a vehicular gateway (10; 20), the vehicular gateway being configured to control an access of a plurality of computational function containers (30) to one or more sensors or actuators (40) of a vehicle (100), the apparatus comprising:
at least one interface (12) for communicating with a backend server; and
one or more processors (14), configured to:
manage a plurality of sets of access settings of the plurality of computational function containers,
receive, when a computational function container is updated via the backend server, an updated set of access settings for the updated computational function container from the backend server,
update the plurality of sets of access settings based on the updated access setting, and provide the plurality of sets of access settings for the vehicular gateway;
wherein each set of access settings defines an access of a single computational function container to the one or more sensors or actuators of the vehicle and a read and write access of a single computational function container to the one or more sensors or actuators of the vehicle.

2. The apparatus according to claim 1, wherein each set of access settings further defines an access of the computational function container to one or more external entities.

3. The apparatus according to claim 1 or 2, wherein the one or more processors are configured to provide information on the respective sets of access settings to the plurality of computational function containers.

4. The apparatus according to one of the claims 1 to 3, wherein the one or more processors are configured to obtain information on access preferences of a driver of the vehicle, to combine the plurality of sets of access settings with the access preferences, and to provide the combination of the plurality of sets of access settings and the access preferences for the plurality of computational function containers.

5. The apparatus according to claim 4, wherein each set of access settings comprises at least one setting being dependent on the access preferences of the driver of the vehicle.

6. The apparatus according to one of the claims 4 or 5, wherein the access preferences are driver-specific, with different access preferences being used for different drivers of the vehicle.

7. The apparatus according to one of the claims 5 or 6, wherein the access preferences are privacy preferences of the driver of the vehicle.

8. The apparatus according to one of the claims 1 to 7, wherein the apparatus implements the vehicular gateway, wherein the one or more processors are configured to control the access of the plurality of computational function containers to the one or more sensors or actuators based on the plurality of sets of access settings.

9. The apparatus according to claim 8, wherein the one or more processors are configured to control the access of the plurality of computational function containers to one or more external entities based on the plurality of sets of access settings.

10. The apparatus according to one of the claims 8 or 9, wherein the one or more processors are configured to report access violations of the plurality of computational function containers to the backend server.

11. The apparatus according to one of the claims 1 to 10, wherein each of the plurality of sets of access settings comprises an identifier, with the identifier being used to identify the corresponding computational function container towards the vehicular gateway.

12. A computer-implemented method for managing a plurality of sets of access settings for a vehicular gateway, the vehicular gateway being configured to control an access of a plurality of computational function containers to one or more sensors or actuators of the vehicle, the method comprising:
managing (110) a plurality of sets of access settings of the plurality of computational function containers;
receiving (120), when a computational function container is updated via a backend server, an updated set of access settings for the updated computational function container from the backend server;
updating (130) the plurality of sets of access settings based on the updated access setting; and
providing (150) the plurality of sets of access settings for the vehicular gateway;
wherein each set of access settings defines an access of a single computational function container to the one or more sensors or actuators of the vehicle and a read and write access of a single computational function container to the one or more sensors or actuators of the vehicle.

13. A computer program having a program code for performing the method of claim 12, when the computer program is executed on a computer, a processor, or a programmable hardware component.

## Patentansprüche

1. Vorrichtung (10) zum Verwalten einer Vielzahl von Sätzen von Zugriffseinstellungen für ein Fahrzeug-Gateway (10; 20), wobei das Fahrzeug-Gateway dazu ausgebildet ist, den Zugriff einer Vielzahl von Rechenfunktionscontainern (30) auf einen oder mehrere Sensoren oder Aktoren (40) eines Fahrzeugs (100) zu steuern, die Vorrichtung umfassend:
mindestens eine Schnittstelle (12) zum Kommunizieren mit einem Backend-Server; und
einen oder mehrere Prozessoren (14), die dazu ausgebildet sind:
eine Vielzahl von Sätzen von Zugriffseinstellungen der Vielzahl von Rechenfunktionscontainern zu verwalten,
wenn ein Rechenfunktionscontainer über den Backend-Server aktualisiert wird, einen aktualisierten Satz von Zugriffseinstellungen für den aktualisierten Rechenfunktionscontainer vom Backend-Server zu empfangen,
die Vielzahl von Sätzen von Zugriffseinstellungen auf der Grundlage der aktualisierten Zugriffseinstellung zu aktualisieren und die Vielzahl von Sätzen von Zugriffseinstellungen für das Fahrzeug-Gateway bereitzustellen;
wobei jeder Satz von Zugriffseinstellungen einen Zugriff eines einzelnen Rechenfunktionscontainers auf den einen oder die mehreren Sensoren oder Aktoren des Fahrzeugs sowie einen Lese- und Schreibzugriff eines einzelnen Rechenfunktionscontainers auf den einen oder die mehreren Sensoren oder Aktoren des Fahrzeugs definiert.

2. Vorrichtung nach Anspruch 1, wobei jeder Satz von Zugriffseinstellungen ferner einen Zugriff des Rechenfunktionscontainers auf eine oder mehrere externe Einheiten definiert.

3. Vorrichtung nach Anspruch 1 oder 2, wobei der eine oder die mehreren Prozessoren dazu ausgebildet sind, der Vielzahl von Rechenfunktionscontainern Informationen über die jeweiligen Sätze von Zugriffseinstellungen bereitzustellen.

4. Vorrichtung nach einem der Ansprüche 1 bis 3, wobei der eine oder die mehreren Prozessoren dazu ausgebildet sind, Informationen über Zugriffspräferenzen eines Fahrers des Fahrzeugs zu erfassen, die Vielzahl von Sätzen von Zugriffseinstellungen mit den Zugriffspräferenzen zu kombinieren und die Kombination aus der Vielzahl von Sätzen von Zugriffseinstellungen und den Zugriffspräferenzen für die Vielzahl von Rechenfunktionscontainern bereitzustellen.

5. Vorrichtung nach Anspruch 4, wobei jeder Satz von Zugriffseinstellungen mindestens eine Einstellung umfasst, die von den Zugriffspräferenzen des Fahrers des Fahrzeugs abhängt.

6. Vorrichtung nach einem der Ansprüche 4 oder 5, wobei die Zugriffspräferenzen fahrerspezifisch sind, wobei für verschiedene Fahrer des Fahrzeugs unterschiedliche Zugriffspräferenzen verwendet werden.

7. Vorrichtung nach einem der Ansprüche 5 oder 6, wobei die Zugriffspräferenzen Datenschutzpräferenzen des Fahrers des Fahrzeugs sind.

8. Vorrichtung nach einem der Ansprüche 1 bis 7, wobei die Vorrichtung das Fahrzeug-Gateway implementiert, wobei der eine oder die mehreren Prozessoren dazu ausgebildet sind, den Zugriff der Vielzahl von Rechenfunktionscontainern auf den einen oder die mehreren Sensoren oder Aktoren auf der Grundlage der Vielzahl von Sätzen von Zugriffseinstellungen zu steuern.

9. Vorrichtung nach Anspruch 8, wobei der eine oder die mehreren Prozessoren dazu ausgebildet sind, den Zugriff der Vielzahl von Rechenfunktionscontainern auf eine oder mehrere externe Einheiten auf der Grundlage der Vielzahl von Sätzen von Zugriffseinstellungen zu steuern.

10. Vorrichtung nach einem der Ansprüche 8 oder 9, wobei der eine oder die mehreren Prozessoren dazu ausgebildet sind, Zugriffsverletzungen der Vielzahl von Rechenfunktionscontainern an den Backend-Server zu melden.

11. Vorrichtung nach einem der Ansprüche 1 bis 10, wobei jeder der Vielzahl von Sätzen von Zugriffseinstellungen eine Kennung umfasst, wobei die Kennung verwendet wird, um den entsprechenden Rechenfunktionscontainer gegenüber dem Fahrzeug-Gateway zu identifizieren.

12. Computerimplementiertes Verfahren zum Verwalten einer Vielzahl von Sätzen von Zugriffseinstellungen für ein Fahrzeug-Gateway, wobei das Fahrzeug-Gateway dazu ausgebildet ist, den Zugriff einer Vielzahl von Rechenfunktionscontainern auf einen oder mehrere Sensoren oder Aktoren des Fahrzeugs zu steuern, das Verfahren umfassend:
Verwalten (110) einer Vielzahl von Sätzen von Zugriffseinstellungen der Vielzahl von Rechenfunktionscontainern,
wenn ein Rechenfunktionscontainer über den Backend-Server aktualisiert wird, Empfangen (120) eines aktualisierten Satzes von Zugriffseinstellungen für den aktualisierten Rechenfunktionscontainer vom Backend-Server,
Aktualisieren (130) der Vielzahl von Sätzen von Zugriffseinstellungen auf der Grundlage der aktualisierten Zugriffseinstellung; und
Bereitstellen (150) der Vielzahl von Sätzen von Zugriffseinstellungen für das Fahrzeug-Gateway;
wobei jeder Satz von Zugriffseinstellungen einen Zugriff eines einzelnen Rechenfunktionscontainers auf den einen oder die mehreren Sensoren oder Aktoren des Fahrzeugs sowie einen Lese- und Schreibzugriff eines einzelnen Rechenfunktionscontainers auf den einen oder die mehreren Sensoren oder Aktoren des Fahrzeugs definiert.

13. Ein Computerprogramm, das einen Programmcode zum Durchführen des Verfahrens nach Anspruch 12 aufweist, wenn das Rechnerprogramm auf einem Computer, einem Prozessor oder einer programmierbaren Hardwarekomponente ausgeführt wird.

## Revendications

1. Appareil (10) destiné à gérer une pluralité d'ensembles de paramètres d'accès pour une passerelle véhiculaire (10 ; 20), la passerelle véhiculaire étant configurée pour contrôler l'accès d'une pluralité de conteneurs de fonctions de calcul (30) à un ou plusieurs capteurs ou actionneurs (40) d'un véhicule (100), l'appareil comprenant :
au moins une interface (12) destinée à communiquer avec un serveur dorsal ; et
un ou plusieurs processeurs (14), configurés pour :
gérer une pluralité d'ensembles de paramètres d'accès de la pluralité de conteneurs de fonctions de calcul,
recevoir, lorsqu'un conteneur de fonctions de calcul est mis à jour via le serveur dorsal, un ensemble mis à jour de paramètres d'accès pour le conteneur de fonctions de calcul mis à jour, en provenance du serveur dorsal,
mettre à jour la pluralité d'ensembles de paramètres d'accès sur la base de l'ensemble mis à jour de paramètres d'accès, et fournir la pluralité d'ensembles de paramètres d'accès à la passerelle véhiculaire ;
dans lequel chaque ensemble de paramètres d'accès définit l'accès d'un unique conteneur de fonctions de calcul au ou aux capteurs ou actionneurs du véhicule, ainsi qu'un accès en lecture et en écriture d'un unique conteneur de fonctions de calcul au ou aux capteurs ou actionneurs du véhicule.

2. Appareil selon la revendication 1, dans lequel chaque ensemble de paramètres d'accès définit en outre l'accès du conteneur de fonctions de calcul à une ou plusieurs entités externes.

3. Appareil selon la revendication 1 ou 2, dans lequel le ou les processeurs sont configurés pour fournir des informations sur les ensembles respectifs de paramètres d'accès à la pluralité de conteneurs de fonctions de calcul.

4. Appareil selon l'une des revendications 1 à 3, dans lequel le ou les processeurs sont configurés pour obtenir des informations sur les préférences d'accès d'un conducteur du véhicule, pour combiner la pluralité d'ensembles de paramètres d'accès avec les préférences d'accès, et pour fournir la combinaison de la pluralité d'ensembles de paramètres d'accès et des préférences d'accès à la pluralité de conteneurs de fonctions de calcul.

5. Appareil selon la revendication 4, dans lequel chaque ensemble de paramètres d'accès comprend au moins un paramètre qui dépend des préférences d'accès du conducteur du véhicule.

6. Appareil selon l'une des revendications 4 ou 5, dans lequel les préférences d'accès sont spécifiques au conducteur, des préférences d'accès différentes étant utilisées pour différents conducteurs du véhicule.

7. Appareil selon l'une des revendications 5 ou 6, dans lequel les préférences d'accès sont des préférences de confidentialité du conducteur du véhicule.

8. Appareil selon l'une des revendications 1 à 7, dans lequel l'appareil met en œuvre la passerelle véhiculaire, le ou les processeurs étant configurés pour contrôler l'accès de la pluralité de conteneurs de fonctions de calcul au ou aux capteurs ou actionneurs sur la base de la pluralité d'ensembles de paramètres d'accès.

9. Appareil selon la revendication 8, dans lequel le ou les processeurs sont configurés pour contrôler l'accès de la pluralité de conteneurs de fonctions de calcul à une ou plusieurs entités externes sur la base de la pluralité d'ensembles de paramètres d'accès.

10. Appareil selon l'une des revendications 8 ou 9, dans lequel le ou les processeurs sont configurés pour signaler les violations d'accès de la pluralité de conteneurs de fonctions de calcul au serveur dorsal.

11. Appareil selon l'une des revendications 1 à 10, dans lequel chacun de la pluralité d'ensembles de paramètres d'accès comprend un identifiant, l'identifiant étant utilisé pour identifier le conteneur de fonctions de calcul correspondant vis-à-vis de la passerelle véhiculaire.

12. Procédé mis en œuvre par ordinateur pour gérer une pluralité d'ensembles de paramètres d'accès pour une passerelle véhiculaire, la passerelle véhiculaire étant configurée pour contrôler l'accès d'une pluralité de conteneurs de fonctions de calcul à un ou plusieurs capteurs ou actionneurs du véhicule, le procédé comprenant :
la gestion (110) d'une pluralité d'ensembles de paramètres d'accès de la pluralité de conteneurs de fonctions de calcul ;
la réception (120), lorsqu'un conteneur de fonctions de calcul est mis à jour via un serveur dorsal, d'un ensemble mis à jour de paramètres d'accès pour le conteneur de fonctions de calcul mis à jour, en provenance du serveur dorsal ;
la mise à jour (130) de la pluralité d'ensembles de paramètres d'accès sur la base de l'ensemble mis à jour de paramètres d'accès ; et
la fourniture (150) de la pluralité d'ensembles de paramètres d'accès pour la passerelle véhiculaire ;
dans lequel chaque ensemble de paramètres d'accès définit l'accès d'un unique conteneur de fonctions de calcul au ou aux capteurs ou actionneurs du véhicule, ainsi qu'un accès en lecture et en écriture d'un unique conteneur de fonctions de calcul au ou aux capteurs ou actionneurs du véhicule.

13. Programme informatique ayant un code de programme pour mettre en œuvre le procédé de la revendication 12, lorsque le programme informatique est exécuté sur un ordinateur, un processeur ou un composant matériel programmable.
